# EUROPÄISCHE PATENTSCHRIFT

(11) **EP 1 989 254 B1**
(45) Veröffentlichungstag und Bekanntmachung des Hinweises auf die Patenterteilung: **11.11.2009**
(21) Anmeldenummer: 07726436.4
(22) Anmeldetag: 20.02.2007
(51) Int. Cl.: C08K 13/02, C09J 4/00, C09D 4/00, C09J 5/00

(54) **(METH) ACRYLATZUSAMMENSETZUNG MIT ERHÖHTER LAGERSTABILITÄT**
(METH)ACRYLATE COMPOSITION WITH INCREASED STORAGE STABILITY
COMPOSITION DE (METH)ACRYLATE AYANT UNE GRANDE STABILITE AU STOCKAGE

(30) Priorität: 20.02.2006 EP 06110171
(43) Veröffentlichungstag der Anmeldung: 12.11.2008
(73) Patentinhaber: Sika Technology AG, 6340 Baar (CH)
(72) Erfinder: MAIER, Steffen, CH-5430 Wettingen (CH); DE COOMAN, Ria, CH-8907 Wettswil a.A. (CH)
(74) Vertreter: Sika Patent Attorneys
(86) Internationale Anmeldenummer: PCT/EP2007/051615
(87) Internationale Veröffentlichungsnummer: WO 2007/096355

(56) Entgegenhaltungen:
- US-A- 4 403 058
- US-A- 4 563 153
- US-B1- 6 417 244
- DATABASE WPI Section Ch, Week 199519 Derwent Publications Ltd., London, GB; Class A12, AN 1995-145037 XP002377372 & JP 07 070472 A (SONY CHEM CORP) 14. März 1995 (1995-03-14)

## Beschreibung

### Technisches Gebiet

Die vorliegende Erfindung betrifft das Gebiet der (Meth)acrylatzusammensetzungen, insbesondere der (Meth)acrylatklebstoffe und -Beschichtungen.

### Stand der Technik

(Meth)acrylate werden schon seit längerem als Klebstoffe und Beschichtungen eingesetzt, wo sie unter dem Einfluss von Radikalen ausgehärtet werden.

Zinkdimethacylat wurde vielfach in (Meth)acrylatzusammensetzungen eingesetzt, da es die Materialeigenschaften und die Beständigkeit bei erhöhten Temperaturen verbessert, aber weniger starke Versprödung verursacht als konventionelle Vernetzer. Es hat sich jedoch gezeigt, dass der Zusatz von Zinkdimethacylat zu einer (Meth)acrylatzusammensetzung zu einer starken Verminderung der Lagerstabilität führen kann.

### Darstellung der Erfindung

Aufgabe der vorliegenden Erfindung ist es daher, eine (Meth)acrylatzusammensetzung zur Verfügung zu stellen, welche bei erhöhter Temperatur eine verbesserte Mechanik und noch eine gute Haftung zu vielen Substraten aufweist, deren Lagerstabilität jedoch verbessert ist.

Es hat sich gezeigt, dass eine Zusammensetzung gemäss Anspruch 1 in der Lage ist, diese Aufgabe zu lösen.

Derartige Zusammensetzungen zeichnen sich auch bei hohen Temperaturen einerseits durch gute Haftungen auf unterschiedlichen Untergründen und andererseits durch eine gute Mechanik aus, und sind dennoch lagerstabil.

Überraschenderweise konnte gefunden werden, dass dieser Effekt durch die Verwendung einer spezifischen Kombination von Additiven, nämlich von Zink(II)-Dimethacrylat und einem Metalloxid bestimmter zwei- oder dreiwertiger Metalle, in organischen (Meth)acrylaten erreicht werden kann.

Diese Zusammensetzungen können radikalisch ausgehärtet werden und finden insbesondere als Klebstoffe oder Beschichtungen Anwendung. Ein wesentlicher Gesichtspunkt der Erfindung betrifft die Verwendung eines Metalloxides solcher zwei- oder dreiwertigen Metalle zur Erhöhung der Lagerstabilität einer Zusammensetzung, welche mindestens ein organisches (Meth)acrylat und Zink(II)-Dimethacrylat umfasst.

Weiterhin betrifft die vorliegende Erfindung eine radikalisch aushärtende zweikomponentige Zusammensetzung gemäss Anspruch 10, ein Packgut bestehend aus einer Verpackung mit zwei von einander getrennten Kammern und einem Packgut gemäss Anspruch 12, eine Verwendung der Zusammensetzung gemäss den Ansprüchen 13 und 14, ein Verfahren zum Verkleben gemäss Anspruch 15, einen Artikel gemäss Anspruch 16 sowie die Verwendung bestimmter Metalloxide gemäss Anspruch 19.

Weitere besonders bevorzugte Ausführungsformen der Erfindung sind Gegenstand der abhängigen Ansprüche.

### Wege zur Ausführung der Erfindung

Die vorliegende Erfindung betrifft Zusammensetzungen, welche mindestens ein organisches (Meth)acrylat, Zink(II)-Dimethacrylat sowie mindestens ein Metalloxid der Formel MO oder M₂O₃ umfassen, wobei M für ein Hauptgruppenmetall oder für Zink steht.

Unter einem "organischen (Meth)acrylat" wird hier und im gesamten vorliegenden Dokument ein Monomer oder Oligomer verstanden, welches mindestens eine Estergruppe der Acrylsäure oder Methacrylsäure aufweist und somit mindestens eine α,β-ungesättigte Doppelbindung aufweist. Acrylsäure und Methacrylsäure sowie deren Salze werden nicht als "organisches (Meth)acrylat" verstanden.

Als organische (Meth)acrylate sind die dem Fachmann bekannten (Meth)acrylatmonomere oder -Oligomere geeignet. Die (Meth)acrylatmonomere weisen insbesondere eine, zwei oder drei (Meth)acrylatgruppen auf.

Insbesondere geeignet sind (Meth)acrylate der Formel (I) oder (II) 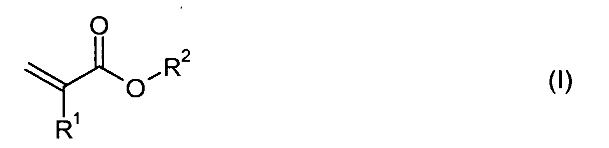 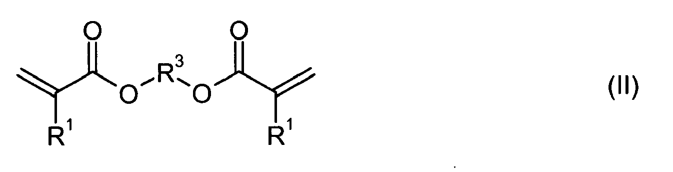 wobei R¹ für H oder CH₃ steht und wobei R² einen verzweigten oder unverzweigten organischen Rest darstellt, welcher insbesondere 1 bis 30, vorzugsweise 4 bis 10, Kohlenstoffatome aufweist und welcher bevorzugt mindestens ein Heteroatom, insbesondere mindestens ein O, aufweist. R² kann cyclische Anteile von gesättigtem, ungesättigtem oder aromatischem Charakter aufweisen.

Beispielhaft als (Meth)acrylatmonomere der Formel (I) genannt sind Hydroxyethyl(meth)acrylat, Hydroxypropyl(meth)acrylat, Hydroxybutyl(meth)-acrylat, Methyl(meth)acrylat, Ethyl(meth)acrylat, 2-Ethylhexyl(meth)acrylat, 2-Phenoxyethyl(meth)acrylat, Lauryl(meth)acrylat, Stearyl(meth)acrylat, Cyclohexyl(meth)acrylat, Trimethylcyclohexyl(meth)acrylat, tert.-Butyl(meth)acrylat, Dicylcopentadienyl(meth)acrylat, Dihydrodicyclopentadienylacrylat, Benzyl-(meth)acrylat, Isobornyl(meth)acrylat, Polypropylenglycolmono(meth)acrylat, Polyethylenglycolmono(meth)acrylat, Tetrahydrofurfuryl(meth)acrylat, alkoxyliertes Tetrahydrofurfuryl(meth)acrylat oder alkoxyliertes Phenol(meth)acrylat oder Lauryl(meth)acrylat.

R³ in Formel (II) steht für einen divalenten organischen Rest, welcher insbesondere 2 bis 100 C-Atome aufweist, und bevorzugt mindestens ein Heteroatom, insbesondere mindestens ein O, aufweist. R³ kann cyclische Anteile von gesättigtem, ungesättigtem oder aromatischem Charakter aufweisen.

Beispielhaft als (Meth)acrylatmonomere der Formel (II) genannt sind Ethylenglykoldi(meth)acrylat, Propylenglykoldi(meth)acrylat, Butylenglykoldi-(meth)acrylat, 1,6-Hexandioldi(meth)acrylat, Neopentylglycoldi(meth)acrylat, Bisphenol-A-di(meth)acrylat, Polyethylenglycoldi(meth)acrylat, Polypropylenglycoldi(meth)acrylat, ethoxyliertes Bisphenol-A-di(meth)acrylat.
Als besonders geeignet gezeigt haben sich Polyalklylenglykoldi(meth)acylate.

Prinzipiell geeignet sind auch höher funktionelle (Meth)acrylatMonomere, wie beispielsweise Trimethylolpropantri(meth)acrylat, Pentaerythritoltri(meth)acrylat, zum Einsatz geeignet. Es ist in diesen Fällen jedoch bevorzugt, dass mindestens ein monofunktionelles oder ein difunktionelles (Meth)acrylat-Monomer vorhanden ist.

Als besonders geeignet als organisches (Meth)acrylat Tetrahydrofurfurylmethacrylat und Tetrahydrofurfurylacrylat sowie deren Abmischungen mit anderen (Meth)acrylaten erwiesen. Bevorzugt ist Tetrahydrofurfurylmethacrylat.

In einer Ausführungsform der Erfindung umfasst die erfindungsgemässe Zusammensetzung mindestens zwei (Meth)acylatmonomere der Formel (I) und/oder Formel (II). Bevorzugt ist mindestens eines davon Tetrahydrofurfurylmethacrylat oder Tetrahydrofurfurylacrylat.

Als (Meth)acrylat-Oligomere gelten insbesondere durch Teilpolymerisation der als (Meth)acrylat-Monomer geeigneten Monomeren erhaltenen Oligomere. Diese Oligomere müssen aber weiterhin immer noch mindestens eine (Meth)acrylatgruppe aufweisen.

Die Gewichtssumme aller organischen (Meth)acrylate beträgt insbesondere mehr als 30 Gewichts-%, bevorzugt zwischen 40 und 80 Gewichts-%, bezogen auf die Zusammensetzung.

Die Zusammensetzung umfasst weiterhin Zink(II)-Dimethacrylat. Es konnte gezeigt werden, dass weder das Zink(II)-Diacrylat noch das Zink(II)-Monomethacrylat die gewünschten Effekte zeigt.
Zink(II)-Dimethacrylat ist kommerziell zum Beispiel unter der Bezeichnung Zinc methacrylate von Aldrich oder Gelest Inc., oder unter dem Handelsnamen SR708 von Sartomer erhältlich.
Zink(II)-Dimethacrylat wird vorzugsweise in einer Menge von 0.01 bis 10 Gewichts-%, insbesondere von 3 bis 8 Gewichts-%, bezogen auf die Zusammensetzung, eingesetzt.

Weiterhin umfasst die Zusammensetzung ein Metalloxid. Dieses Metalloxid ist ein Oxid eines zwei- oder dreiwertigen Metalles M und besitzt die Formel MO oder M₂O₃. Das Metall ist hierbei ausgewählt aus der Gruppe bestehend aus Zink und den Hauptgruppenmetallen. Das zwei- oder dreiwertige Metall M sind insbesondere Be(II), Mg(II), Ca(II), Sr(II), Ba(II), Al(III) oder Zn(II), vorzugsweise Mg(II), Ca(II), Sr (II), Ba(II), Al(III) oder Zn(II).
Als dreiwertiges Metall M ist insbesondere Al(III) bevorzugt.
Als zweiwertiges Metall M ist insbesondere Mg(II), Ca(II) oder Zn(II) bevorzugt.
Zweiwertige Metalle sind gegenüber dreiwertigen Metallen bevorzugt. Die bevorzugtesten Metalloxide sind ZnO oder MgO. Das am meist bevorzugte Metalloxid ist Magnesium(II)oxid, MgO.
Diese Metalloxide können natürlicher Art oder synthetisch hergestellt sein. Bevorzugt werden sie als Pulver eingesetzt. Bevorzugt weisen sie eine hohe spezifische Oberfläche auf.

Der Anteil aller zwei- oder dreiwertigen Metalloxide der Formel MO und M₂O₃, insbesondere aller Oxide zweiwertiger Metalle, ist vorzugsweise derart gewählt, dass deren Gewichtssumme einen Wert zwischen 0.01 und 20 Gewichts-%, insbesondere zwischen 0.1 und 10 Gewichts-%, bevorzugt zwischen 0.5 und 5 Gewichts-%, bezogen auf die Zusammensetzung, beträgt.

Das Gewichts-Verhältnis von Zink(II)-Dimethacrylat und Metalloxid beträgt vorzugsweise einen Wert von 1:2 - 120:1, insbesondere 2:1 - 20:1, bevorzugt 5:1 - 15:1.

Als besonders geeignet gezeigt haben sich Zusammensetzungen, welche einen Gehalt von
30 - 70 Gew.-%, insbesondere 40 - 60 Gew.-%, organisches (Meth)acrylat;
1 - 15 Gew.-%, insbesondere 2 - 12 Gew.-% Zink(II)-Dimethacrylat; sowie 0.01 - 10 Gew.-%, insbesondere 0.1 - 5 Gew.-%, Metalloxid
umfassen.

Die Zusammensetzungen können gegebenenfalls noch weitere Bestandteile enthalten.
Derartige zusätzliche Bestandteile sind Core-Shell-Polymere, Flüssigkautschuke, Katalysatoren, organische und anorganische Füllstoffe, Farbstoffe, Pigmente, Inhibitoren, UV- und Hitzestabilisatoren, Antistatika, Flammschutzmittel, Biozide, Weichmacher, Wachse, Verlaufsmittel, Haftvermittler, Thixotropiermittel und weitere dem Fachmann bekannte gängige Rohstoffe und Additive.

Als Katalysatoren eignen sich einerseits insbesondere tertiäre Amine wie beispielsweise N,N-Dimethylanilin, N,N-Dimethyl-p-Toluidin, N,N-Diethylanilin, N,N-Diethyltoluidin, N,N-bis(2-hydroxyethyl)-p-Toluidin, N-ethoxylierte p-Toluidine, N-Alkylmorpholine oder Mischungen davon. Andererseits eignen sich Übergangsmetallsalze oder -Komplexe, insbesondere der Metalle Cobalt, Mangan, Vanadium und Kupfer, als Katalysatoren.

Als geeignete Haftvermittler sind insbesondere Alkoxysilane und Phosphoratome enthaltenden (Meth)acrylate zu nennen.

Als Polymerisationsinhibitoren sind insbesondere Hydrochinone, insbesondere Hydrochinon und Methylhydrochinone, oder t-butyl-p-Cresol geeignet.

Besonders geeignete zusätzliche Bestandteile sind neben Katalysatoren insbesondere Core-Shell-Polymere und Flüssigkautschuke.

Core-Shell-Polymer bestehen aus einem elastischen Kernpolymer und einem starren Schalen-Polymer. Insbesondere geeignete Core-Shell-Polymere bestehen aus einem Kern (Core) aus vernetztem elastischem Acrylat- oder Butadien-Polymer, welche auf eine starre Schale (Shell) eines starren thermoplastischen Polymers aufgepropft ist.
Besonders geeignete Core-Shell-Polymere sind diejenigen, welche im organischen (Meth)acrylat aufquellen, aber sich nicht lösen.
Bevorzugte Core-Shell-Polymere sind sogenannte MBS Polymere, welche kommerziell unter dem Handelsnamen Clearstrength^{™} von Atofina oder Paraloid^{™} von Rohm and Haas erhältlich sind. Die Core-Shell-Polymere werden bevorzugt in einer Menge von 5 bis 40 Gewichts-% bezogen auf die Zusammensetzung eingesetzt.

Als Flüssigkautschuke sind insbesondere Butadien/Acrylonitril-Copolymer basierende Flüssigkautschuke oder Polyurethan-basierende Flüssigkautschuke geeignet. Die Flüssigkautschuke weisen bevorzugt ungesättigte Doppelbindungen auf.
Als besonders geeignete Flüssigkautschuke haben sich einerseits vinylterminierte Butadien/Acrylnitril-Copolymere, wie sie unter der Produkte-Reihe Hycar^{®} VTBNX von BFGoodrich^{®}, beziehungsweise von Noveon kommerziell angeboten werden.

Andererseits als besonders geeignete Flüssigkautschuke gelten (Meth)acrylat-terminierte Polyurethanpolymere. Derartige Polymere können aus Polyolen und Polyisocyanaten unter Bildung von Isocyanat-funktionellen Polyurethanprepolymeren und anschliessender Umsetzung mit Hydroxyalkyl-(meth)acrylaten hergestellt werden.
Bevorzugte Isocyanat-funktionelle Polyurethanprepolymere sind das Reaktionsprodukt eines Polyisocyanates, insbesondere eines Diisocyanates und eines Polyols im Verhältnis Isocyanat-Gruppen-Equivalente zu HydroxylGruppen-Equivalente von grösser als 1. Somit sind auch Addukte vom Typ NCO-xx-NHCO-O-yy-O-OCONH-xx-OCN auch als Polyurethane Prepolymer in diesem Zusammenhang zu verstehen, wobei xx für ein Diisocyanat ohne NCO Gruppen und yy für ein Diol ohne OH Gruppen stehen.
Grundsätzlich kann hierfür jedes Polyol HO-R-(OH)q mit q ≥ 1 verwendet werden, wobei R für ein Polymergerüst mit Heteroatomen im Gerüst oder als Seitenketten steht.
Bevorzugte Polyole sind Polyole, welche ausgewählt sind aus der Gruppe bestehend aus Polyoxyalkylenpolyole, auch "Polyetherpolyole" genannt, Polyesterpolyole, Polycarbonatpolyole und deren Mischungen. Bevorzugte Polyole sind Diole. Die meist bevorzugten Diole sind Polyoxyethylendiole oder Polyoxypropylendiole oder Polyoxybutylendiole .
Die Polyoxyalkylenpolyole können einen niedriegen Ungesättigtheitsgrad (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), oder auch einen höheren Ungesättigtheitsgrad, hergestellt beispielsweise mit Hilfe von anionischen Katalysatoren wie NaOH, KOH, CsOH oder Alkalialkoholaten, aufweisen.
Die Verwendung von Polyoxyalkylenpolyolen mit tiefem Ungesättigtheitsgrad, insbesondere von weniger als 0.01 mEq/g, wird für Polyole mit einem Molekulargewicht von ≥ 2000 bevorzugt.
Grundsätzlich können jegliche Polyisocyanate mit zwei oder mehr Isocyanatgruppen verwendet werden.

Beispielsweise seien erwähnt 2,4- and 2,6-Toluylenediisocyanat (TDI) und deren Mischungen, 4,4'-Diphenylmethandiisocyanat (MDI), jegliche Isomeren von Diphenylmethandiisocyanat, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- and 2,4,4-Trimethyl-1,6-hexamethylendiisocyanat (TMDI), 1,12-Dodecamethylendiisocyanat, Cyclohexan-1,3- und -1,4-diisocyanat und jegliche Mischungen dieser Isomeren miteinander, 1-Isocyanato-3,3,5-trimethyl-5-isocyanatomethyl-cyclohexan (=Isophorondiisocyanat oder IPDI), Perhydro-2,4'- and -4,4'-diphenylmethandiisocyanat (HMDI), 1,4-Diisocyanato-2,2,6-trimethylcyclohexan (TMCDI), m- und p-Xylylenediisocyanat (XDI), 1,3- and 1,4-Tetramethylxylylenediisocyanat (TMXDI), 1,3- and 1,4-Bis-(isocyanatomethyl)-cyclohexan, jegliche Oligomere oder Polymere der oben genannten Isocyanate sowie jegliche Mischungen der genannten Isocyanate untereinander. Bevorzugte Polyisocyanate sind MDI, TDI, HDI, IPDI und deren Mischungen untereinander. Meist bevorzugt sind IPDI und HDI und deren Mischung.
Die aus den Polyolen und Polyisocyanaten hergestellten Isocyanatterminierten Prepolymeren werden mit (Meth)acrylsäureestern, welche Hydroxylgruppen aufweisen, umgesetzt. Bevorzugte (Meth)acrylsäureester, welche Hydroxylgruppen aufweisen, sind Hydroxyethyl(meth)acrylat oder Hydroxypropyl(meth)acrylat. Die zwei Reaktanden werden in an und für sich bekannter Art und Weise miteinander reagiert, typischerweise in einem stöchiometrischen Überschuss des (Meth)acrylsäureesters, welcher Hydroxylgruppen aufweist.
Das bevorzugte (Meth)acrylat-terminierte Polyurethanpolymer ist das Reaktionsprodukt eines IPDI/Polypropylenglycol-Polyurethanprepolymers oder eines HDI/Polypropylenglycol-Polyurethanprepolymers mit Hydroxyethyl(meth)-acrylat oder mit Hydroxypropyl(meth)acrylat.
Die Herstellung des Polyurethanprepolymers und/oder des (Meth)acrylat-terminierten Polyurethanpolymers kann in Gegenwart des organischen (Meth)acrylates erfolgen, so lange dieses keine NCO-raktiven Gruppen aufweist.

Die Flüssigkautschuke werden bevorzugt in einer Menge von 5 bis 40 Gewichts-% bezogen auf die Zusammensetzung eingesetzt.

Als besonders geeignete Zusammensetzungen haben sich Zusammensetzungen gezeigt, welche mindestens ein organisches (Meth)acrylat, Zink(II)-Dimethacrylat, mindestens ein Metalloxid eines zwei- oder dreiwertigen Metalls sowie ein Core-Shell-Polymer und einen Flüssigkautschuk enthalten.

Die Zusammensetzung soll bevorzugt einen neutralen oder einen leicht basischen pH, aufweisen.

Die Zusammensetzungen sind grundsätzlich mit den dem Fachmann bekannten Verfahren und Apparaturen herstellbar. Insbesondere hat sich jedoch das folgenden Herstellverfahren als vorteilhaft erwiesen:
Das organische (Meth)acrylat wird in einem Reaktionsgefäss vorgelegt. Anschliessend wird der gegebenenfalls vorhandene Flüssigkautschuk und/oder Core-Shell-Polymer eingerührt. Schliesslich werden Zink(II)-Dimethacrylat und Metalloxid eingerührt, gegebenenfalls weitere Rohstoffe wie Aktivatoren, Haftvermittler, und Additive. Nachdem eine homogene Zusammensetzung erhalten wurde, wird sie gegebenenfalls entlüftet und abgepackt.

Die Zusammensetzung kann thermisch, durch Strahlung oder durch chemische Erzeugung von Radikalen ausgehärtet werden.
Bevorzugt ist eine Aushärtung durch chemische Radikalerzeugung.

Deshalb ist ein weiterer Gegenstand der Erfindung eine radikalisch aushärtende zweikomponentige Zusammensetzung, welche aus einer ersten Komponente **K1** und einer zweiten Komponente **K2** besteht. Die verwendeten Rohstoffe werden dazu so auf die beiden Komponenten verteilt, dass eine ausreichende Lagerstabilität gewährleistet ist. Eine bevorzugte derartige zweikomponentige Zusammensetzung ist wie folgt beschrieben:
Die erste Komponente **K1** bildet die oben beschriebene Zusammensetzung.
Die zweite Komponente **K2** enthält einen Radikalbildner. Dieser Radikalbildner ist insbesondere ein Peroxid oder ein Perester. Als Peroxid sind neben Wasserstoffperoxid vor allem organische Peroxide oder Hydroperoxide zu nennen.
Die einsetzbaren organischen Peroxide oder Hydroperoxide richten sich nach den Einsatzgebieten, Temperaturen und der chemischen Kompatibilität mit anderen Rohstoffen. Als Peroxid besonders bevorzugt hat sich Dibenzoylperoxid erwiesen. Als Hydroperoxide sind insbesondere Cumolhydroperoxid und Isopropylcumolhydroperoxid bevorzugt.
Als Radikalbildner ist Dibenzoylperoxid bevorzugt.

Die Komponente **K2** kann weitere Bestandteile enthalten. Insbesondere sind dies die bei der als Komponente **K1** wirkenden Zusammensetzung vorgängig genannten zusätzlichen Bestandteile, unter der Bedingung, dass diese zusätzlichen Bestandteile nicht mit anderen Inhaltsstoffen wie z. B. dem Radikalbildner zumindest während der Lagerzeit in nennenswertem Ausmass reagieren.

Die Komponenten **K1** und **K2** verfügen vorzugsweise über vergleichbare Viskositäten.
Vorzugsweise beträgt das Volumenverhältnis von Komponente **K1** und **K2** zwischen 20:1 und 1:2, bevorzugt in etwa 10:1.
Die Komponenten **K1** und **K2** werden zur Aushärtung gemischt. Die daraus resultierende Mischung ist vorzugsweise pastös und bevorzugt thixotrop. Die Komponenten **K1** und **K2** sind vor dem Mischen in separaten Behältnissen aufbewahrt.

Ein weiterer Aspekt der Erfindung betrifft eine Packung welche aus einer Verpackung und einem Packgut besteht.

Die Verpackung weist hierbei zwei von einander getrennte Kammern auf. Das Packgut ist eine zweikomponentige radikalisch aushärtende Zusammensetzung bestehend aus einer ersten Komponente **K1** und einer zweiten Komponente **K2**, wie sie soeben beschrieben wurden. Die Komponenten **K1** ist hierbei in der einen Kammer und die Komponente **K2** ist in der anderen Kammer der Verpackung vorhanden.
Die Verpackung bildet eine Einheit, in der die zwei Kammern zusammengehalten oder direkt miteinander verbunden sind.

Die zwei Kammern sind über eine trennbare Abtrennung voneinander getrennt. Diese Abtrennung kann beispielsweise eine Folie oder eine brechbare Schicht oder ein oder zwei Verschlüsse sein, welche eine Öffnung (13) abdichten. In einer bevorzugten Ausführungsform stellt die Verpackung eine Doppelkartusche dar. Insbesondere ist sie als Zwillingskartusche (8) oder Coaxial-Kartusche (9) ausgebildet. In der Zwillingskartusche sind zwei nebeneinander liegende, allenfalls durch Stege oder eine Verbindungsnaht oder eine Umhüllung, zum Beispiel durch eine Folie, in Längsrichtung miteinander verbundene, röhrenförmige Behälter vorhanden, welche auf der einen Seite mit einem verschiebbaren Kolben (11) verschlossen sind und auf der anderen Seite je eine abgeschlossene Öffnung (13) aufweisen, welche typischerweise zusammen in einem Mündungsstück angeordnet sind. Die Coaxial-Kartusche entspricht der Zwillingskartusche mit dem Unterschied, dass die röhrenförmigen Behälter nicht nebeneinander sondern ineinander angeordnet sind und sich somit eine Rohr-in-Rohr Anordnung bildet.

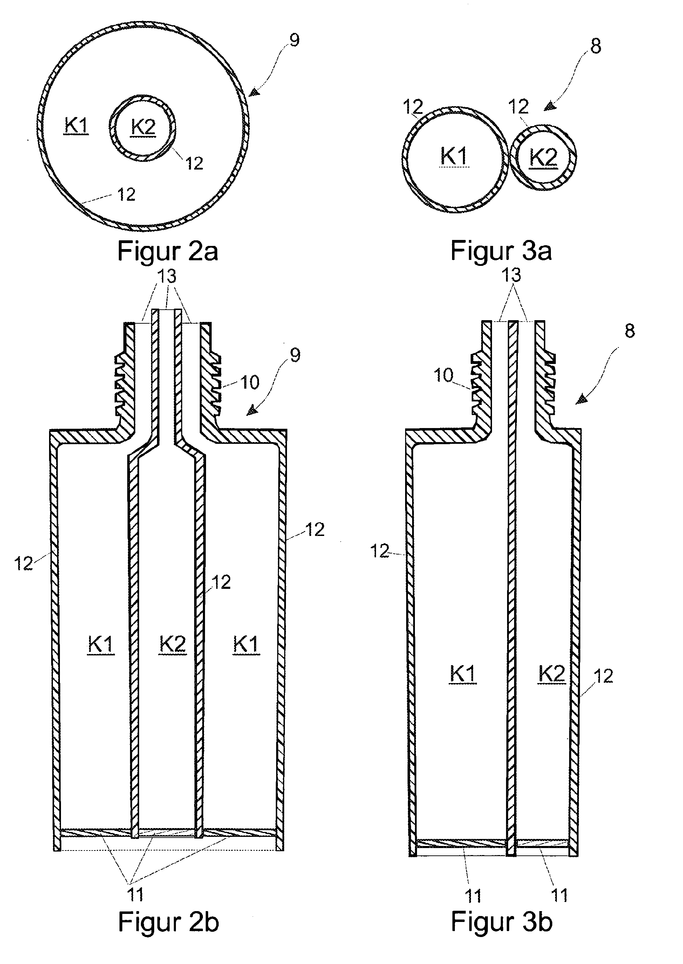

Figur 2 resp. Figur 3 zeigen eine derartige Coaxial-Kartusche resp. Zwillingskartusche (Querschnitt (Fig. 2a, 3a) Längsschnitt (Fig. 2b, 3b)).
Derartige Kartuschenverpackungen sind Stand der Technik für zweikomponentige Zusammensetzungen.
Eine weitere Möglichkeit der Verpackung bildet ein Mehrkammerschlauchbeutel oder ein Mehrkammerschlauchbeutel mit Adapter, wie sie beispielsweise in WO 01/44074 A1 offenbart sind, und deren Inhalt somit als Gegenstand der vorliegenden Erfindung mit eingeschlossen wird.

Es hat sich gezeigt, dass mit den erfindungsgemässen Zusammensetzungen lagerstabile Zusammensetzungen erhalten werden können, welche nach dem Aushärten flexible Materialen ergeben, die auch bei höheren Temperaturen noch eine gute Mechanik und eine gute Haftung zu verschiedenen Substraten aufweisen.
Insbesondere werden in diesem Dokument mit "guter Mechanik" oder "verbesserter Mechanik" ein hoher Speichermodul, eine hohe Glasübergangstemperatur, eine hohe Zugscherfestigkeit, eine hohe Scherbeständigkeit und eine hohe Bruchdehnung, insbesondere gleichzeitig miteinander kombiniert, verstanden.

Die erfindungsgemässe Zusammensetzung, beziehungsweise die erfindungsgemässe radikalisch aushärtende zweikomponentige Zusammensetzung, kann vielfältig verwendet werden. Bevorzugt ist einerseits deren Verwendung als Klebstoff und andererseits als Beschichtung, insbesondere als Primer, Lack oder Bodenbelag.
Je nach Verwendung ist die Zusammensetzung unterschiedlich zu formulieren, um den jeweiligen Bedürfnissen gerecht zu werden. Als beispielhafte Unterschiede seien Viskosität, Oberflächenaspekte und Topfzeit genannt.

Als besonders bevorzugte Verwendung der Zusammensetzung, beziehungsweise der radikalisch aushärtenden zweikomponentigen Zusammensetzung, gilt die Verwendung als Klebstoff.

Für das Verkleben wird insbesondere ein Verfahren angewendet, welches die folgenden Schritte umfasst:
- Mischen der Komponenten **K1** und **K2** einer zweikomponentigen radikalisch aushärtenden zweikomponentigen Zusammensetzung, wie sie vorgängig beschrieben wurde,
- Applizieren der gemischten zweikomponentigen Zusammensetzung auf mindestens eine der zu verklebenden Substratoberflächen,
- Fügen innerhalb der Offenzeit
- Aushärten der zweikomponentigen Zusammensetzung.

Das Mischen erfolgt vorzugsweise mit Hilfe eines Statikmischers, welcher auf die vorzugsweise für dieses Verfahren verwendete Verpackung mit zwei Kammern aufgesetzt werden kann.
Das Substrat, auf dessen Oberfläche der gemischte Klebstoff appliziert wird, kann sehr verschieden sein. Es kann beispielsweise aus einem Kunststoff, Glas, Keramik, einem mineralischen Produkt, Beton, Holz, Holzwerkstoff, Metall oder einem Metalllack bestehen.
Besonders geeignet ist das Verfahren für das Verkleben von Kunststoff, Glas, Holz oder Metall.
Das Fügen innerhalb der Offenzeit erfolgt durch ein Kontaktieren des Klebstoffes mit einer zweiten Oberfläche eines Substrates. Dieses Substrat kann aus demselben oder einem andersartigen Material als dasjenige, auf welches der Klebstoff appliziert wurde, bestehen.
Es ist im Rahmen der Erfindung, dass das eine und/oder andere Substrat vor dem Applizieren des Klebstoffes bzw. Kontaktieren mit dem Klebstoff mit einem Primer oder einer Haftvermittlerzusammensetzung vorbehandelt werden können. Bevorzugt wird keine Vorbehandlung des Substrates mittels Primer oder einer Haftvermittlerzusammensetzung.

Durch die Verklebung werden Artikel gebildet, welche von vielfältiger Natur sein können. Insbesondere handelt es sich hierbei um industriell gefertigte Artikel.
Derartige Artikel sind einerseits insbesondere industriell gefertigte Transportmittel oder Ein- oder Anbaumodule eines Transportmittels. Insbesondere sind dies Artikel an einem Automobil oder einem Lastfahrzeug, einem Bus oder einem Schienenfahrzeug oder Wasserfahrzeug.

Andererseits sind dies sogenannte Weisswaren, wie beispielsweise Waschmaschinen, Geschirrspüler, Küchenapparate und Elektro- und Elektronikgeräte.
Andererseits sind dies industriell gefertigte Artikel für den Gebäudebau oder den Tief- oder Hochbau. Insbesondere bevorzugt sind Türen oder Fenster. Als meist bevorzugt gelten Fenster.
In einer weiteren bevorzugten Ausführungsform handelt es sich beim gebildeten Artikel um Fassadenelemente, insbesondere aus Glas oder metallischen Werkstoffen. Beispielsweise können derartige Fassadenelemente Fassadenabdeckungen oder -Panels sein.

In einer besonders bevorzugten Ausführungsform wird der Klebstoff für das Verkleben von Glasscheiben mit einem Tür- oder Fensterrahmen, welcher insbesondere aus Holz, Aluminium oder einem Kunststoff, bevorzugt PVC, gefertigt ist, verwendet.

Ein wesentlicher Aspekt der Erfindung stellt die Verwendung eines Metalloxides eines zwei- oder dreiwertigen Metalls der Formel MO oder M₂O₃, insbesondere MO, zur Erhöhung der Lagerstabilität einer Zusammensetzung umfassend mindestens ein organisches (Meth)acrylat und Zink(II)-Dimethacrylat, dar. M steht hierbei für ein Hauptgruppenmetall oder Zink. Die Möglichkeiten und bevorzugten Ausführungsformen sind bereits vorgängig erwähnt worden.

Es können somit Zusammensetzungen hergestellt werden, welche sowohl bei Raumtemperatur als auch bei Temperaturen zwischen 50°C und 150°C, insbesondere zwischen 70°C und 120°C über gute Haftung und Mechanik auf einer breiten Palette von Materialien aufweisen, die dennoch flexibel sind und eine gute Lagerstabilität aufweisen.
Unter "flexibel" werden hierbei Bruchdehnungen von mehr als 20 %, insbesondere von mehr als 50 %, bevorzugt von mehr als 100 %, verstanden. Falls es sich um einen Klebstoff handelt, sind bei diesen Dehnungen beispielsweise bei 80°C auch Zugscherfestigkeiten von mehr als 3 MPa, insbesondere mehr als 4 MPa, erreichbar.
Es können Zusammensetzungen mit Glasübergangstemperaturen von mehr als 60°C erreicht werden.
Die Zusammensetzungen weisen gegenüber nicht erfinderischen Zusammensetzungen, insbesondere solchen mit Zink(II)dimethacrylat und (Meth)acrylat-Monomer ohne Metalloxid, eine erhöhte Lagerstabilität auf sowohl bei Raumtemperatur als auch bei erhöhter Temperatur.

Um ein schnelle Aussage bezüglich der Lagerstabilität zu erhalten, kann in der dem Fachmann bekannter Art und Weise eine Lagerung bei erhöhter Temperatur (z.B. 42°C oder 50°C) erfolgen, um ein schnell zugängliches Indiz für die Lagerstabilität bei Raumtemperatur zu erhalten.
Der Begriff Lagerstabilität wird in diesem Dokument so verstanden, dass eine Zusammensetzung, insbesondere deren Beschaffenheit, sich während der Lagerzeit nicht oder nur wenig verändern soll. Als Mass für die Bestimmung der Lagerstabilität wird derjenige Zeitpunkt bestimmt, zu welchem sich die Zusammensetzung, beziehungsweise deren Viskosität, so stark verändert hat, dass eine Applikation nicht mehr möglich ist, beziehungsweise die Zusammensetzung geliert.
Die erfindungsgemässen Zusammensetzungen weisen Lagerstabilitäten bei Raumtemperatur von über 6 Monaten, insbesondere von über 9 Monaten, auf. Es hat sich gezeigt, dass bei 50°C eine Lagerstabilität von mindestens 10 Tagen gewährleistet sein muss. Die erfindungsgemässen Zusammensetzungen weisen bei 50°C insbesondere eine Lagerstabilität von mindestens 10 Tagen, insbesondere von mehr als 1 Monat, bevorzugt von mehr als 2 Monaten, auf.

Bevorzugt sind Zusammensetzungen, die eine Lagerstabilität von mindestens 10 Tagen, insbesondere von mehr als 50 Tagen, bei 50°C, sowie eine Zugscherfestigkeit (23°C) auf Aluminium von mehr als 10 MPa, insbesondere von mehr als 13 MPa, eine Bruchdehnung (23°C) von mehr als 50 %, insbesondere von mehr als 100 %, eine Glasübergangstemperatur von mehr als 50°C, insbesondere von mehr als 60°C, einen Speichermodul G' (80°C) von mehr als 10 MPa, insbesondere von mehr als 12 MPa, und eine Zugfestigkeit (23°C) von mehr als 10 MPa, insbesondere von mehr als 12 MPa, aufweisen.

### Beispiele

### Zusammensetzungen

Es wurden die in Tabelle 1 angebenen Beispiele von Zusammensetzungen hergestellt. Hierzu wurden in einem Dissolver der Flüssigkautschuk und das N,N-Dimethyl-p-toluidin im Monomer gelöst und anschliessend das Core-shell-Polymer eingearbeitet. Danach wurden das Metall-(Meth)acrylat und das Metalloxid (bzw. Metallcarbonat) sowie die Thixotropiermittel eingerührt, bis eine makroskopisch homogene Paste erhalten wurde. Nach dem Entlüften wurde die gebildete Paste in 250 ml Zwillingskartuschen abgefüllt. Die Beispiele und Vergleichsbeispiele aus Tabelle 1 wurden bei unterschiedlichen Temperaturen gelagert, bis Gelierung festgestellt werden konnte.
Für die Charakterisierung der mechanischen Eigenschaften und Verklebungen wurden die Zusammensetzungen gemäss Tabelle 1 im Volumenverhältnis 10:1 mit einer Härterpaste (bestehend aus 25% Dibenzoylperoxid in Weichmachern und mineralischen Füllstoffen) gemischt.
Die Zugfestigkeit ("TS") wurde nach ISO 527 bei 23°C bestimmt.
Die Bruchdehnung ("BD") wurden nach ISO 527 bei 23°C bestimmt.
Die Ergebnisse sind in Tabelle 2 zusammengestellt.
Die Zugscherfestigkeit ("ZSF") wurde in Anlehnung an ISO 4587/DIN EN 1465 auf einer Zugmaschine Zwick/Roell Z005 bestimmt (Klebefläche: 12mmx25mm, Schichtdicke: 1.5mm, Messgeschwindigkeit: 10 mm/min, Substrate: Aluminium (100mm x 25mm x 2mm), Temperatur: 23°C (falls nicht anders genannt), Vorbehandlung: Sika ®ADPrep (Sika Schweiz AG)).

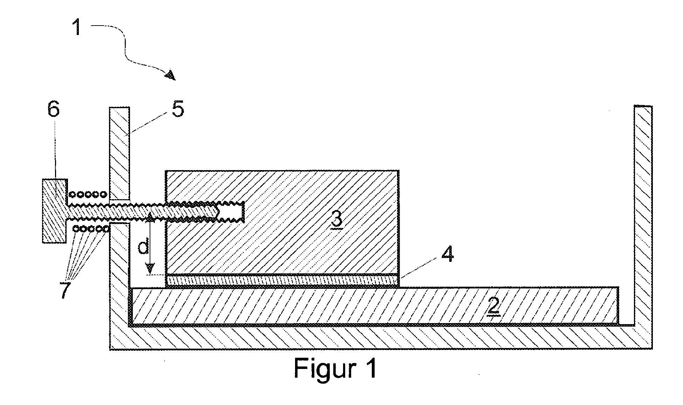

Mit Hilfe eines Torsionspendels wurden nach DIN EN 61006 die Glasübergangstemperatur ("Tg") und nach DIN EN ISO 6721-2 der Speichermodul ("G'") bestimmt.
Die Scherbeständigkeit ("SB") wurde mittels der Apparatur (1), welche schematisch in Figur 1 dargestellt ist, bestimmt. Dazu wird ein Glasprobekörper (2) und ein Aluminiumblock (3) mittels der jeweiligen Zusammensetzung (4) in einer Schichtdicke von 0.7 mm in einer Fläche von 25mm x 20mm verklebt. Der Aluminiumprobekörper weist hierbei in der Seitenfläche eine M8 Gewindebohrung auf (Abstand (d) zwischen Aluminium-Klebefläche zu Mittelpunkt der Bohrung: 7.5 mm). Der verklebte Probekörper wurde bündig in einem Stahlrahmen (5) eingelegt, welcher auf Höhe des Aluminiumprobekörpers ein Loch aufweist, durch welches eine Spannschraube (6) eingeführt wurde, und in den Aluminiumkörper eingeschraubt wurde. Durch Drehung der Schraube wurde eine Feder (7) mit bekannter Federkonstante komprimiert und so definierte Kräfte eingestellt.
Für die Messung der Scherbeständigkeit wurden nun folgender Ablauf angewandt: Es wurde 0.1 MPa eingestellt (Zugkraft/Verklebungsfläche). Der Probekörper wurde nun im Ofen während 30 Tagen bei 80°C gelagert. Falls der Probekörper abgerissen wurde, wurde ein Wert von "<0.1 MPa" notiert. Falls der Verbundkörper immer noch intakt war, wurde ein neu hergestellter Verbundkörper mit 0.2 MPa belastet und ebenfalls 30 Tage bei 80°C gelagert. Dieses Prozedere wurde bei Bestehen des Tests mit steigernden Werten, d.h. 0.3 MPa, 0.4 MPa und 0.5 MPa etc., fortgesetzt. Als Messwert wird die letzte noch überstandene Spannung notiert.
Tabelle 3 zeigt Zugscherfestigkeiten des Beispiels 6, und damit die Haftungen auf unterschiedlichen Untergründen.

### Bezugszeichenliste

- 1: Apparatur zur Bestimmung der Scherbeständigkeit
- 2: Glasprobekörper
- 3: Aluminiumblock
- 4: Zusammensetzung
- 5: Stahlrahmen
- 6: Spannschraube
- 7: Feder
- 8: Zwillingskartusche
- 9: Coaxialkartusche
- 10: Gewinde
- 11: verschiebbarer Kolben
- 12: Kammerwand
- 13: Öffnung

- Fig.1: zeigt einen Querschnitt durch eine Apparatur zur Bestimmung der Scherbeständigkeit
- Fig.2: zeigt eine Coaxialkartusche (Querschnitt Fig.2a, Längsschnitt Fig. 2b)
- Fig.3: zeigt eine Zwillingskartusche (Querschnitt Fig. 3a, Längsschnitt Fig. 3b)

**Tabelle 1. Zusammensetzungen (Angaben in Gewichtsteilen).**

| | ***Ref.1*** | ***Ref.2*** | ***Ref.3*** | **1** | ***2*** | ***Ref.4*** | ***3*** | ***Ref.5*** | ***4*** | ***5*** | ***Ref.6*** | ***6*** |
|---|---|---|---|---|---|---|---|---|---|---|---|---|
| Tetrahydrofurfurylmethacrylat | **55** | **55** | **55** | **55** | **55** | **54.5** | **54.5** | **54.5** | **54.5** | **54.5** | **54.5** | **54.5** |
| Zn(II)-Dimethacrylat | **8** | | | **8** | **8** | **8** | **8** | **8** | **8** | **8** | **8** | **8** |
| Zn(II)-Diacrylat | | 8 | | | | | | | | | | |
| Zn(II)-Monomethacrylat | | | 8 | | | | | | | | | |
| MgO | | | | **1** | **2** | | | | | | | **2** |
| MgCO₃ | | | | | | 1 | | | | | | |
| CaO | | | | | | | **2** | | | | | |
| CaCO₃ | | | | | | | | 2 | | | | |
| ZnO | | | | | | | | | **6** | **10** | | |
| ZnCO₃ | | | | | | | | | | | 2 | |
| Core Shell Polymer | 20 | 20 | 20 | 20 | 20 | 20 | 20 | 20 | 20 | 20 | 20 | 20 |
| Hycar® VTBNX | 14 | 14 | 14 | 14 | 14 | 14 | 14 | 14 | 14 | 14 | 14 | |
| PU-Methacrylat* | | | | | | | | | | | | 14 |
| Thixotropiermittel | 2 | 2 | 2 | 2 | 2 | 2 | 2 | 2 | 2 | 2 | 2 | 2 |
| N,N-Dimethyl-p-toluidin | 1.5 | 1.5 | 1.5 | 1.5 | 1.5 | 1.5 | 1.5 | 1.5 | 1.5 | 1.5 | 1.5 | 1.5 |
| *Total* | *100* | *100* | *100* | *101* | *102* | *101* | *102* | *102* | *106* | *110* | *102* | *102* |

| | | | | | | | | | | | | |
|---|---|---|---|---|---|---|---|---|---|---|---|---|
| *Molekulargewicht 4700 g/mol, Methacrylatfunktionalität = 2. | | | | | | | | | | | | |

**Tabelle 2. Resultate.**

| | ***Ref.1*** | ***Ref.2*** | ***Ref.3*** | ***1*** | ***2*** | ***Ref.4*** | ***3*** | ***Ref.5*** | ***4*** | ***5*** | ***Ref.6*** | ***6*** |
|---|---|---|---|---|---|---|---|---|---|---|---|---|
| t_{L}(23°C)[d] | 180 | >240 | >180 | >240 | >240 | n.b. | >240 | n.b. | >240 | >240 | >240 | >240. |
| t_{L}(42°C)[d] | 24 | >240 | >180 | >120 | >120 | 31 | >120 | 31 | 45 | 45 | 38 | >240 |
| t_{L}(50°C)[d] | 7 | >240 | >180 | >120 | >120 | 7 | 120 | 5 | 10 | 17 | 6 | >50 |
| TS [MPa] | 14.1 | 11.2 | 13 | 14.6 | 16.2 | 15.2 | 14 | 14.3 | 15.4 | 16.5 | 15.2 | 13.8 |
| BD[%] | 70 | 157 | 147 | 98 | 67 | 79 | 101. | 102 | 112 | 103 | 88 | 115 |
| T*_{g}*[°C] | 66 | 57 | 60 | 63 | 66 | n.b. | 60 | n.b. | 62 | 61 | n.b. | 66 |
| G'(80°C) [MPa] | 10.5 | 2.6 | 4.1 | 11 | 14 | n.b. | 7 | n.b. | 13 | 10 | n.b. | 17 |
| ZSF(23°C) [MPa] | 13.1 | 10 | n.b. | 11.3 | 13.3 | 15 | 12.6 | 15.5 | 10.9 | 16.1 | 13.3 | 14.2 |
| ZSF(80°C) [MPa] | 4.1 | 1.7 | 1.6 | 4.2 | 6.1 | 3.2. | 5 | 3 | 2.9 | 3.2 | 6.5 | 4.5 |
| SB (80°C) [MPa] | 0.4 | <0.1 | n.b. | n.b. | 0.5 | n.b. | n.b. | n.b. | n.b. | n.b. | n.b. | 0.5 |

| | | | | | | | | | | | | |
|---|---|---|---|---|---|---|---|---|---|---|---|---|
| t_{L}=Lagerzeit, TS = Zugfestigkeit, BD= Bruchdehnung, T*g*= Glasübergangstemperatur, G'(80°C)= Speichermodul bei 80°C, ZSF = Zugscherfestigkeit, SB=Scherbeständigkeit, n.b.=nicht bestimmt. | | | | | | | | | | | | |

**Tabelle 3. Zugscherfestigkeiten [MPa] auf unterschiedlichen Substraten.**

| | AlMg3 | AlMg3 | Glas | PVC | Fichte | Kiefer | Meranti |
|---|---|---|---|---|---|---|---|
| | (23°C) | (80°C) | (23°C) | (23°C) | (23°C) | (23°C) | (23°C) |
| ***6*** | 13.5 | 4.5 | 10.6 | 7.9 | 5.5 | 7.6 | 5.7 |

## Patentansprüche

1. Zusammensetzung umfassend
mindestens ein organisches (Meth)acrylat;
Zink(II)-Dimethacrylat
sowie mindestens ein Metalloxid eines zwei- oder dreiwertigen Metalles, welches ausgewählt ist aus der Gruppe bestehend aus Zink und den Hauptgruppen-Metallen, der Formel MO oder M₂O₃.

2. Zusammensetzung gemäss Anspruch 1, **dadurch gekennzeichnet, dass** das Metalloxid ein Oxid von Zink oder eines zweiwertigen Hauptgruppen-Metalls ist.

3. Zusammensetzung gemäss Anspruch 1 oder 2, **dadurch gekennzeichnet, dass** das Metalloxid Zink(II)oxid oder Magnesium(II)oxid oder Calcium(II)oxid ist.

4. Zusammensetzung gemäss einem der vorhergehenden Ansprüche, **dadurch gekennzeichnet, dass** die Zusammensetzung zusätzlich mindestens ein Core-shell Polymer enthält.

5. Zusammensetzung gemäss einem der vorhergehenden Ansprüche, **dadurch gekennzeichnet, dass** die Zusammensetzung zusätzlich mindestens einen Flüssigkautschuk enthält.

6. Zusammensetzung gemäss einem der vorhergehenden Ansprüche, **dadurch gekennzeichnet, dass** der Anteil der Gewichtssumme aller organischen (Meth)acrylate mehr als 30 Gewichts-% beträgt.

7. Zusammensetzung gemäss einem der vorhergehenden Ansprüche, **dadurch gekennzeichnet, dass** der Anteil der Gewichtssumme aller Metalloxide, insbesondere aller Oxide von zweiwertigen Metallen, zwischen 0.01 und 20 Gewichts-% bezogen auf die Zusammensetzung, beträgt.

8. Zusammensetzung gemäss einem der vorhergehenden Ansprüche, **dadurch gekennzeichnet, dass** das Gewichts-Verhältnis von Zink(II)-Dimethacrylat und Metalloxid 1:2 - 120:1 beträgt.

9. Zusammensetzung gemäss einem der vorhergehenden Ansprüche umfassend
30 - 70 Gew.-% organisches (Meth)acrylat;
1 - 15 Gew.-% Zink(II)-Dimethacrylat
0.01 - 10 Gew.-% Metalloxid.

10. Radikalisch aushärtende zweikomponentige Zusammensetzung bestehend
aus einer ersten Komponente **K1,**
welche eine Zusammensetzung gemäss einem der Ansprüche 1 bis 9 darstellt;
und einer zweiten Komponente **K2**,
welche mindestens ein Peroxid oder einen Perester enthält.

11. Radikalisch aushärtende zweikomponentige Zusammensetzung gemäss Anspruch 10, **dadurch gekennzeichnet, dass** das Volumenverhältnis von Komponente **K1** und **K2** zwischen 20:1 und 1:2 beträgt.

12. Packung bestehend aus einer Verpackung mit zwei von einander getrennten Kammern und einem Packgut, welche eine zweikomponentige Zusammensetzung gemäss Anspruch 10 oder 11 darstellt, wobei in der einen Kammer die Komponente **K1** und in der anderen Kammer die Komponente **K2** vorhanden ist.

13. Verwendung einer Zusammensetzung gemäss Anspruch 1 bis 9 oder einer radikalisch aushärtenden zweikomponentigen Zusammensetzung gemäss Anspruch 10 oder 11 als Klebstoff.

14. Verwendung einer Zusammensetzung gemäss Anspruch 1 bis 9 oder einer radikalisch aushärtenden zweikomponentigen Zusammensetzung gemäss Anspruch 10 oder 11 als Beschichtung.

15. Verfahren zum Verkleben umfassend die Schritte
- Mischen der Komponenten **K1** und **K2** einer zweikomponentigen radikalisch aushärtenden zweikomponentigen Zusammensetzung gemäss Anspruch 10 oder 11,
- Applizieren der gemischten zweikomponentigen Zusammensetzung auf mindestens eine der zu verklebenden Substratoberflächen,
- Fügen innerhalb der Offenzeit
- Aushärten der zweikomponentigen Zusammensetzung.

16. Artikel erhalten durch ein Verfahren zum Verkleben gemäss Anspruch 15.

17. Artikel gemäss Anspruch 16, **dadurch gekennzeichnet, dass** der Artikel ein industriell gefertigter Artikel ist.

18. Artikel gemäss Anspruch 16, **dadurch gekennzeichnet, dass** der Artikel ein Fenster oder eine Tür ist oder zu einer Fassade gehört.

19. Verwendung eines Metalloxides eines zwei- oder dreiwertigen Metalls, welches ausgewählt ist aus der Gruppe bestehend aus Zink und den Hauptgruppen-Metallen, der Formel MO oder M₂O₃ zur Erhöhung der Lagerstabilität einer Zusammensetzung umfassend mindestens ein organisches (Meth)acrylat und Zink(II)-Dimethacrylat.

20. Verwendung gemäss Anspruch 19, **dadurch gekennzeichnet, dass** das Metalloxid Zink(II)oxid oder Magnesium(II)oxid oder Calcium(II)oxid ist.

## Claims

1. A composition comprising
at least one organic (meth)acrylate;
zinc(II) dimethacrylate
and also at least one metal oxide of a divalent or trivalent metal which is selected from the group consisting of zinc and the main-group metals, of the formula MO or M₂O₃.

2. The composition of claim 1, **characterized in that** the metal oxide is an oxide of zinc or of a divalent main-group metal.

3. The composition of claim 1 or 2, **characterized in that** the metal oxide is zinc(II) oxide or magnesium(II) oxide or calcium(II) oxide.

4. The composition of any one of the preceding claims, **characterized in that** the composition further comprises at least one core-shell polymer.

5. The composition of any one of the preceding claims, **characterized in that** the composition further comprises at least one liquid rubber.

6. The composition of any one of the preceding claims, **characterized in that** the fraction of the sum by weight of all organic (meth)acrylates is more than 30% by weight based on the composition.

7. The composition of any one of the preceding claims, **characterized in that** the fraction of the sum by weight of all the metal oxides, more particularly of all the oxides of divalent metals, is between 0.01% and 20% by weight based on the composition.

8. The composition of any one of the preceding claims, **characterized in that** the weight ratio of zinc(II) dimethacrylate and metal oxide is 1:2 - 120:1.

9. A composition of any one of the preceding claims comprising
30% - 70% by weight of organic (meth)acrylate;
1% - 15% by weight of zinc(II) dimethacrylate
0.01% - 10% by weight of metal oxide.

10. A free-radically curing, two-component composition consisting
of a first component **K1,**
which represents a composition of any one of claims 1 to 9;
and of a second component **K2,**
which comprises at least one peroxide or perester.

11. The free-radically curing, two-component composition of claim 10, **characterized in that** the volume ratio of component **K1** to **K2** is between 20:1 and 1:2.

12. A pack consisting of packaging having two mutually separate chambers and contents which represent a two-component composition of claim 10 or 11, component **K1** being present in one chamber and component **K2** in the other chamber.

13. The use of a composition of claim 1 to 9 or of a free-radically curing, two-component composition of claim 10 or 11 as an adhesive.

14. The use of a composition of claim 1 to 9 or of a free-radically curing, two-component composition of claim 10 or 11 as a coating.

15. A method of adhesive bonding comprising the steps of
- mixing the components **K1** and **K2** of a two-component, free-radically curing composition, of claim 10 or 11,
- applying the mixed two-component composition to at least one substrate surface to be bonded,
- joining the adherents within the open time, and
- curing the two-component composition.

16. An article obtained by a method of adhesive bonding of claim 15.

17. The article of claim 16, **characterized in that** the article is an industrially produced article.

18. The article of claim 16, **characterized in that** the article is a window or a door or belongs to an architectural facing.

19. The use of a metal oxide of a divalent or trivalent metal which is selected from the group consisting of zinc and the main-group metals, of the formula MO or M₂O₃ in order to increase the storage stability of a composition comprising at least one organic (meth)acrylate and zinc(II) dimethacrylate.

20. The use of claim 19, **characterized in that** the metal oxide is zinc(II) oxide or magnesium(II) oxide or calcium(II) oxide.

## Revendications

1. Composition comprenant
au moins un (méth)acrylate organique ;
du diméthacrylate de zinc-(II)
ainsi qu'au moins un oxyde métallique d'un métal di- ou trivalent qui est choisi dans le groupe constitué par le zinc et les métaux des groupes A du système périodique, de formule MO ou M₂O₃.

2. Composition selon la revendication 1, **caractérisée en ce que** l'oxyde métallique est un oxyde de zinc ou d'un métal divalent des groupes A du système périodique.

3. Composition selon la revendication 1 ou 2, **caractérisée en ce que** l'oxyde métallique est l'oxyde de zinc-(II) ou l'oxyde de magnésium-(II) ou l'oxyde de calcium-(II).

4. Composition selon l'une quelconque des revendications précédentes, **caractérisée en ce que** la composition en outre contient au moins un polymère à noyau-enveloppe.

5. Composition selon l'une quelconque des revendications précédentes, **caractérisée en ce que** la composition en outre contient au moins un caoutchouc liquide.

6. Composition selon l'une quelconque des revendications précédentes, **caractérisée en ce que** la proportion de la somme des poids de tous les (méth)acrylates organiques est de plus de 30 % en poids.

7. Composition selon l'une quelconque des revendications précédentes, **caractérisée en ce que** la proportion de la somme des poids de tous les oxydes métalliques, en particulier de tous les oxydes de métaux divalents, est comprise entre 0,01 et 20 % en poids, par rapport à la composition.

8. Composition selon l'une quelconque des revendications précédentes, **caractérisée en ce que** le rapport pondéral du diméthacrylate de zinc-(II) et de l'oxyde métallique va de 1:2 à 120:1.

9. Composition selon l'une quelconque des revendications précédentes, comprenant
30-70 % en poids de (méth)acrylate organique ;
1-15 % en poids de diméthacrylate de zinc-(II)
0,01-10 % en poids d'oxyde métallique.

10. Composition bicomposant durcissable par voie radicalaire, consistant
en un premier composant **K1,**
qui représente une composition selon l'une quelconque des revendications 1 à 9 ;
et en un second composant **K2,**
qui contient au moins un peroxyde ou un perester.

11. Composition bicomposant durcissable par voie radicalaire selon la revendication 10, **caractérisée en ce que** le rapport en volume du composant **K1** au composant **K2** est compris entre 20:1 et 1:2.

12. Emballage consistant en un emballage comportant deux compartiments séparés l'un de l'autre et en un produit emballé, qui représente une composition bicomposant selon la revendication 10 ou 11, le composant **K1** étant présent dans un compartiment et le composant **K2** étant présent dans l'autre compartiment.

13. Utilisation d'une composition selon l'une quelconque des revendications 1 à 9 ou d'une composition bicomposant durcissable par voie radicalaire selon la revendication 10 ou 11, en tant qu'adhésif.

14. Utilisation d'une composition selon l'une quelconque des revendications 1 à 9 ou d'une composition bicomposant durcissable par voie radicalaire selon la revendication 10 ou 11, en tant que revêtement.

15. Procédé pour le collage, comprenant les étapes suivantes
- mélange des composants **K1** et **K2** d'une composition bicomposant durcissable par voie radicalaire selon la revendication 10 ou 11,
- application de la composition bicomposant mélangée, sur au moins l'une des surfaces de support à coller,
- assemblage en l'espace du temps d'utilisation
- durcissement de la composition bicomposant.

16. Article obtenu par un procédé pour le collage selon la revendication 15.

17. Article selon la revendication 16, **caractérisé en ce que** l'article est un article fabriqué industriellement.

18. Article selon la revendication 16, **caractérisé en ce que** l'article est une fenêtre ou une porte ou fait partie d'une façade.

19. Utilisation d'un oxyde métallique d'un métal di- ou trivalent qui est choisi dans le groupe constitué par le zinc et les métaux des groupes A du système périodique, de formule MO ou M₂O₃, pour augmenter la stabilité au stockage d'une composition comprenant au moins un (méth)acrylate organique et du diméthacrylate de zinc-(II).

20. Utilisation selon la revendication 19, **caractérisée en ce que** l'oxyde métallique est l'oxyde de zinc-(II) ou l'oxyde de magnésium-(II) ou l'oxyde de calcium-(II).
